# EUROPEAN PATENT APPLICATION

(11) **EP 4 749 166 A1**
(43) Date of publication of application: **27.05.2026**
(21) Application number: 24842909.4
(22) Date of filing: 26.06.2024
(51) Int. Cl.: F16J 15/3296, F16J 15/18, F16J 15/3232, F16J 15/3252

(54) **SEALING DEVICE**

(30) Priority: 19.07.2023 JP 2023117385
(71) Applicant: Eagle Industry Co., Ltd., Minato-ku Tokyo 105-8587 (JP)
(72) Inventor: KUNIMITSU Koshi, Tokyo 105-8587 (JP); TANAKA Tomohiro, Tokyo 105-8587 (JP); SAITO Kenichi, Tokyo 105-8587 (JP); OKAMOTO Yuji, Tokyo 105-8587 (JP)
(74) Representative: Patentquadrat Patentanwaltsgesellschaft mbH
(86) International application number: PCT/JP2024/023152
(87) International publication number: WO 2025/018114

(57) **Abstract**

To provide a seal device with simple pressure control.

A seal device 1 includes a tubular body 10 through which a rotating shaft 2 extends, and a seal ring 25 attached to the tubular body 10 and sealing between the tubular body 10 and the rotating shaft 2, the seal device having at least two seal spaces S5, S6 with the seal ring 25 interposed therebetween. A sealing fluid OL3 is introduced into a seal space S5 from outside, and the seal space S5 and a seal space S6 are in communication with each other via a flow passage 6. The seal device 1 further includes a pressure regulator 30 disposed in the flow passage 6 and configured to regulate pressure of the sealing fluid introduced into the seal space S5 and introduce the sealing fluid into the seal space S6.

## Description

### {TECHNICAL FIELD}

The present invention relates to a seal device, for example, a seal device for sealing relative rotating portions of rotary machines that are applied to ship propulsion systems, tidal power generators, or the like.

### {BACKGROUND ART}

Some seal devices provided in rotary machines of ship propulsion systems, tidal power generators, or the like seal an annular gap formed at relative rotating portions to prevent sealed fluids such as lubricating oil inside an equipment from leaking to the outside of the ship and to prevent external fluids such as seawater from entering the equipment.

For example, seal devices in Patent Citation 1 are provided at opposite ends in an axial direction of a stern tube that supports a bearing of a propeller shaft, and the seal devices on the opposite sides seal lubricating oil into the stern tube. The seal devices each include a tubular member and a first seal ring to a third seal ring that are attached to the inner peripheral surface of the tubular member so as to be spaced apart from each other in the axial direction. The seal rings are lip seals, and the radially inner ends thereof slide on the outer peripheral surface of a liner fitted and fixed onto the propeller shaft.

A first space is defined between the first seal ring and the second seal ring on a ship exterior side. A fluid having a fluid pressure higher than the seawater pressure is supplied to the first space from an external first supply device. In addition, a second space is defined between the second seal ring and the third seal ring on a ship interior side. A fluid having a fluid pressure higher than the fluid pressure in the first space and the hydraulic pressure in the stern tube is supplied to the second space by an external second supply device.

### {CITATION LIST}

### {Patent Literature}

Patent Citation 1: WO2018/216155 (Page 7, FIG. 2)

### {SUMMARY OF INVENTION}

### {Technical Problem}

In the seal devices as described in Patent Citation 1, the fluid pressure in the second space, which is higher than the fluid pressure in the first space, presses the lip portion of the second seal ring against the liner to seal the first space and the second space, thereby preventing leakage of lubricating oil to the outside of the equipment.

However, in the seal device as described in Patent Citation 1, the fluid having the pressure regulated by a first supply device is supplied to the first space, and the fluid having the pressure regulated by a second supply device is supplied to the second space. Therefore, when the seawater pressure varies, the pressures of the fluids are required to be regulated individually, complicating the control of the pressures in the first space and the second space.

The present invention has been made in view of such problems, and an object of the present invention is to provide a seal device with easy pressure control.

### {Solution to Problem}

In order to solve the foregoing problems, a seal device according to the present invention includes a tubular body through which a rotating shaft extends, and a seal ring attached to the tubular body and sealing between the tubular body and the rotating shaft, the seal device having at least two seal spaces with the seal ring interposed therebetween, wherein a sealing fluid is introduced into one of the seal spaces from outside, the one of the seal spaces and another one of the seal spaces are in communication with each other via a flow passage, and the seal device further comprises a pressure regulator disposed in the flow passage and configured to regulate pressure of the sealing fluid introduced into the one seal space and introduce the sealing fluid into the another one of the seal spaces. According to the aforesaid feature of the present invention, the regulated sealing fluid introduced into the one of seal spaces can be regulated in pressure by the pressure regulator and introduced into the another one of the seal spaces, so that the pressures in the one of the seal spaces and the another one of the seal spaces can be easily regulated to appropriate pressures.

It may be preferable that the flow passage is formed in the tubular body. According to this preferable configuration, since no piping or the like connected to the another one of the seal spaces is disposed outside the tubular body, the structure of the seal device can be made compact.

It may be preferable that the another one of the seal spaces is disposed on an equipment interior side of the one of the seal spaces, and an oil chamber is disposed further on the equipment interior side as compared with the another one of the seal spaces. According to this preferable configuration, oil tending to leak from the oil chamber on the equipment interior side to an equipment exterior side can be collected in the another lower-pressure seal space, and the one higher-pressure seal space is disposed on the equipment exterior side of the another one of the seal spaces, so that leakage of oil to the equipment exterior side can be prevented.

It may be preferable that the one of the seal spaces and the another one of the seal spaces are adjacent to each other, the seal ring is a lip seal, and a sealing force is increased by a pressure difference between the one of the seal spaces and the another one of the seal spaces. According to this preferable configuration, the sealing force of the lip seal is increased by the pressure difference between the one of the seal spaces and the another one of the seal spaces, so that leakage of the fluid can be effectively prevented. In addition, since the fluid is unlikely to move between the one of the seal spaces and the another one of the seal spaces from any portions other than the flow passage, the pressures in the one of the seal spaces and the another one of the seal spaces can be easily regulated.

It may be preferable that the sealing fluid in the another one of the seal spaces is configured for being discharged to the outside. According to this preferable configuration, the sealing fluid in the another one of the seal spaces can be discharged to the outside.

It may be preferable that the pressure regulator is a valve with a valve body spring-biased. According to this preferable configuration, the opening can be adjusted according to variations in the pressure difference between the one of the seal spaces and the another one of the seal spaces.

### {BRIEF DESCRIPTION OF DRAWINGS}

FIG. 1 is a sectional view illustrating a seal device according to a first embodiment of the present invention.
FIG. 2 is an exploded view illustrating the structure of a pressure regulating valve in the first embodiment.
FIG. 3 is a schematic view illustrating the pressure state of seal spaces in the first embodiment.
FIG. 4 is a sectional view illustrating a seal device according to a second embodiment of the present invention.
FIG. 5 is a sectional view illustrating a seal device according to a third embodiment of the present invention.

### {DESCRIPTION OF EMBODIMENTS}

Modes for implementing a seal device according to the present invention will be described below based on embodiments.

### {First embodiment}

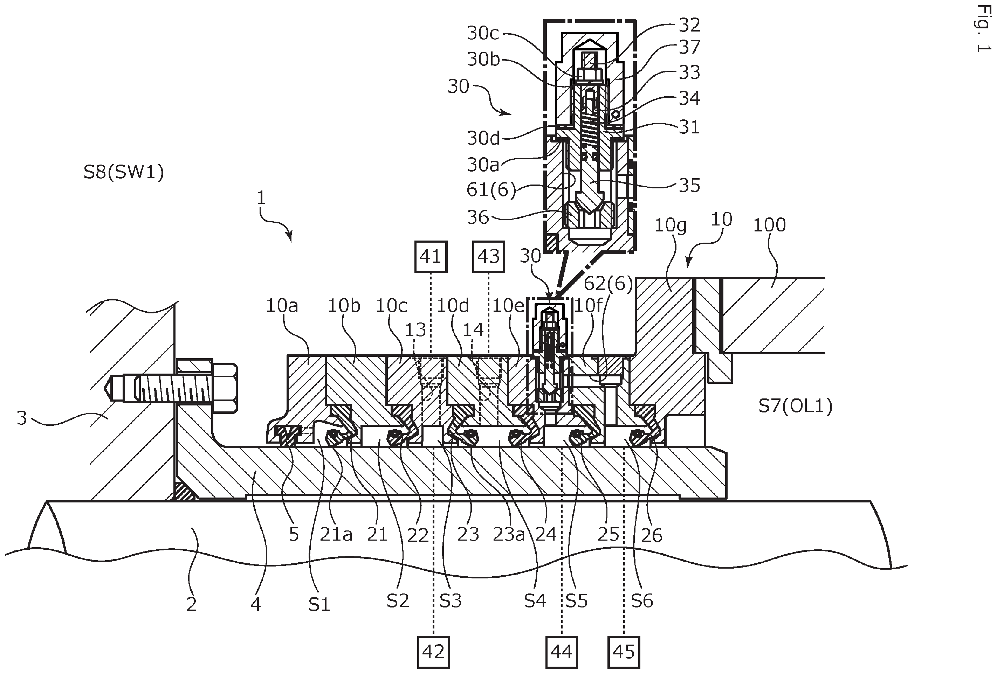

A seal device according to a first embodiment of the present invention will be described with reference to FIGS. 1 to 3. Incidentally, in this embodiment, a seal device suitable for a stern tube of a ship is described as an example. In addition, the description will be made based on the assumption that the left side of the drawing sheet of FIG. 1 is a stern side (ship exterior side) as an equipment exterior side of the seal device and the right side of the drawing sheet of FIG. 1 is a bow side (ship interior side) as an equipment interior side of the seal device.

As illustrated in FIG. 1, a seal device 1 according to the first embodiment is a shaft sealing device for a ship propulsion system. Inside a stern tube 100 through which a propeller shaft 2 as a rotating shaft having a propeller 3 for propulsion, a bearing (not illustrated) is disposed and a lubricating oil OL1 as a sealed fluid is sealed.

The seal device 1 is disposed on the stern side of the stern tube 100 to prevent the lubricating oil OL1 as an internal fluid from leaking to the outside of the ship between the stern tube 100 and a liner 4 fitted and fixed onto the propeller shaft 2 and to prevent seawater SW1 as an external fluid from entering the ship. The liner 4 of this embodiment constitutes part of the propeller shaft 2.

Incidentally, a seal device (not illustrated) is disposed on the bow side of the stern tube 100 to prevent lubricating oil from leaking to a machine chamber inside the ship between the stern tube 100 and the propeller shaft 2.

As illustrated in FIG. 1, the seal device 1 mainly includes a housing 10 as a tubular body, a first lip seal 21 to a sixth lip seal 26, and a pressure reducing valve 30 as a pressure regulator.

A first split housing 10a, a second split housing 10b, a third split housing 10c, a fourth split housing 10d, a fifth split housing 10e, a sixth split housing 10f, and a seventh split housing 10g in order from the stern side are fitted together in an axial direction and integrally connected with bolts (not illustrated) or the like to form the housing 10 into a substantially cylindrical shape. In the housing 10, a flange portion formed on the seventh split housing 10g on the bow side is fixed to the stern tube 100 with bolts (not illustrated) or the like.

The first lip seal 21 has a radially outer portion held between the first split housing 10a and the second split housing 10b in a sealed manner. The second lip seal 22 has a radially outer portion held between the second split housing 10b and the third split housing 10c in a sealed manner. The third lip seal 23 has a radially outer portion held between the third split housing 10c and the fourth split housing 10d in a sealed manner.

The fourth lip seal 24 has a radially outer portion held between the fourth split housing 10d and the fifth split housing 10e in a sealed manner. The fifth lip seal 25 has a radially outer portion held between the fifth split housing 10e and the sixth split housing 10f in a sealed manner. The sixth lip seal 26 has a radially outer portion held between the sixth split housing 10f and the seventh split housing 10g in a sealed manner.

In addition, the first split housing 10a has an inner peripheral surface to which a seal 5 for preventing the entry of foreign matter is attached.

The first lip seal 21 to the sixth lip seal 26 define a plurality of seal spaces in the axial direction between the housing 10 and the liner 4.

Specifically, a first seal space S1 is formed between the seal 5 and the first lip seal 21. A second seal space S2 is formed between the first lip seal 21 and the second lip seal 22. A third seal space S3 is formed between the second lip seal 22 and the third lip seal 23. A fourth seal space S4 is formed between the third lip seal 23 and the fourth lip seal 24.

A fifth seal space S5 as one of the seal spaces is formed between the fourth lip seal 24 and the fifth lip seal 25. A sixth seal space S6 as another one of the seal spaces is formed between the fifth lip seal 25 and the sixth lip seal 26. Incidentally, an oil chamber S7 inside the stern tube 100 is formed on the ship interior side of the sixth seal space S6.

The first lip seal 21 is disposed so that a lip portion 21a thereof faces toward the ship exterior side, and the pressure on the ship exterior side of the first lip seal 21, namely, the pressure in the first seal space S1, acts as part of the tightening pressure on the lip portion 21a. Incidentally, the second lip seal 22, the fourth lip seal 24, the fifth lip seal 25, and the sixth lip seal 26 have substantially the same configuration as the first lip seal 21.

In addition, the third lip seal 23 is disposed so that a lip portion 23a thereof faces toward the ship interior side, and the pressure on the ship interior side of the third lip seal 23, namely, the pressure in the fourth seal space S4, acts as part of the tightening pressure on the lip portion 23a.

The second seal space S2 is formed in the second split housing 10b.

In the third split housing 10c, a communication hole 13 is formed to communicate the third seal space S3 and an external air introduction device 41, and a discharge hole (not illustrated) is also formed to communicate the third seal space S3 and an external discharge tank 42.

In the fourth split housing 10d, a communication hole 14 is formed to communicate the fourth seal space S4 and a first oil supply device 43.

In the fifth split housing 10e, a communication hole (not illustrated) is formed to communicate the fifth seal space S5 and a second oil supply device 44, and a communication hole 61 constituting part of the flow passage 6 is also formed to communicate the fifth seal space S5 and the sixth seal space S6.

The communication hole 61 has a substantially T shape with a radially extending portion and a portion that branches off toward the ship interior side from the middle of the radially extending portion. The pressure reducing valve 30, which will be described later, is attached to the radially outer side of the radially extending portion of the communication hole 61.

In addition, in the sixth split housing 10f, a communication hole 62 constituting part of the flow passage 6 together with the communication hole 61 is formed to communicate the fifth seal space S5 and the sixth seal space S6. The communication hole 62 extends in an inverted L shape from the branching portion of the communication hole 61 and is in communication with the sixth seal space S6.

The flow passage 6 of the present invention is constituted by the communication hole 61 and the communication hole 62 and communicates the fifth seal space S5 and the sixth seal space S6.

In addition, in sixth split housing 10f, a discharge hole (not illustrated) is formed to communicate the sixth seal space S6 and an external discharge tank 45.

Incidentally, in this embodiment, a mode in which the discharge tank 42 and the discharge tank 45 are provided separately has been provided as an example; however, the same discharge tank may be used for both.

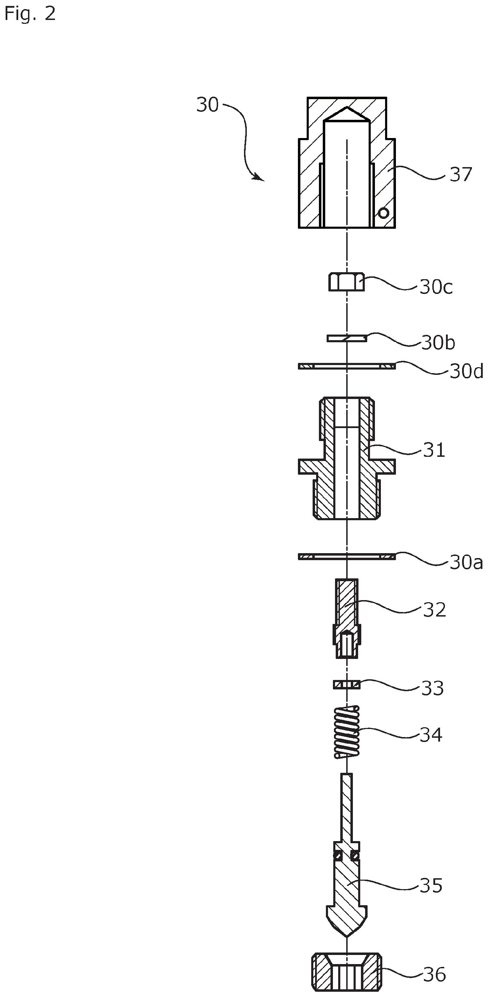

As illustrated in FIGS. 1 and 2, the pressure reducing valve 30 is a poppet valve and mainly includes a fixed plug 31, a pressure regulating rod 32, a push plate 33, a spring 34, a valve body 35, a valve seat member 36, and a cap 37.

The fixed plug 31 is screwed into and fixed to the radially outer side of the radially extending portion of the communication hole 61 in the fifth split housing 10e via a packing 30a.

The pressure regulating rod 32 is screwed into and fixed to the fixed plug 31 so that its position can be adjusted. A fixing nut 30c is screwed into a portion of the pressure regulating rod 32 that protrudes outward from the fixed plug 31 via a spring washer 30b, preventing the screwed state between the pressure regulating rod 32 and the fixed plug 31 from loosening due to vibration or the like.

The cap 37 is fitted and fixed onto the outer side of the fixed plug 31 via a packing 30d.

The valve body 35 is disposed on the radially inner side of the pressure regulating rod 32 in the fixed plug 31 so as to be movable toward and away from the valve seat member 36 via the push plate 33 and the spring 34.

The valve seat member 36 is screwed into and fixed to the radially inner side of the radially extending portion of the communication hole 61 in the fifth split housing 10e. The valve seat member 36 has a valve seat, and the valve body 35 can move toward and away from the valve seat to adjust the opening of the flow passage 6.

In addition, the relative position of the pressure regulating rod 32 to the fixed plug 31 can be adjusted to adjust the biasing force of the spring 34 that biases the valve body 35 toward the valve seat member 36.

Next, the fluid pressure in each of the seal spaces will be described.

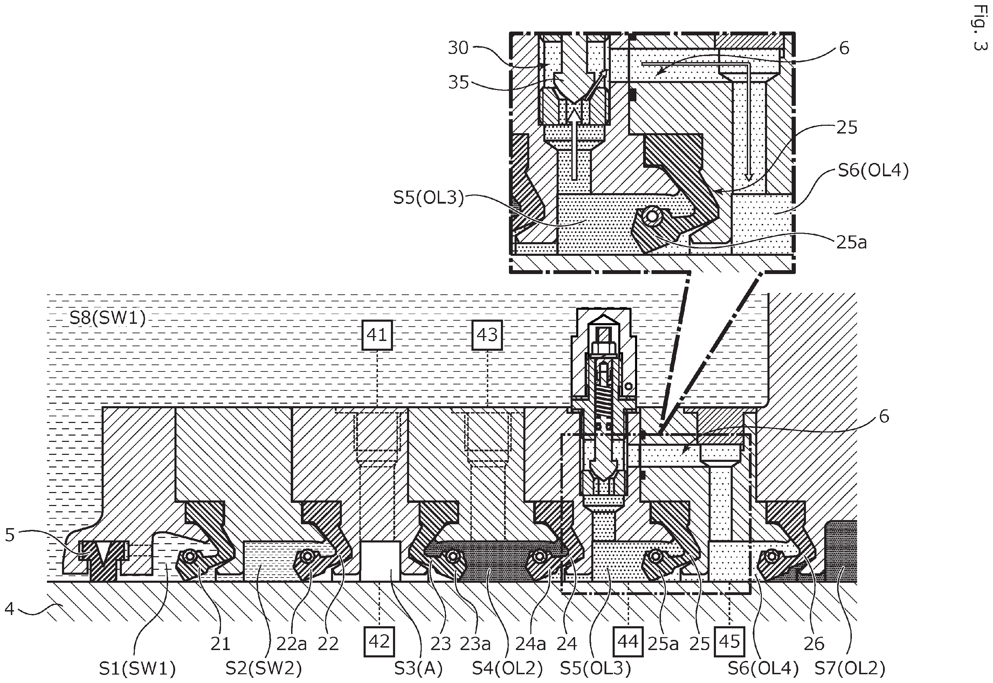

As illustrated in FIG. 3, the seawater SW1 flows into the first seal space S1 through the gap between the seal 5 and the liner 4, and the pressure in the first seal space S1 is substantially the same as that in a ship exterior space S8.

Air A in the third seal space S3, which will be described later, is blown out between the second lip seal 22 and the liner 4 and is introduced into the second seal space S2. In addition, the air introduced into the second seal space S2 is blown out toward the first seal space from the gap between the first lip seal 21 and the liner 4. The pressure in the second seal space S2 is regulated to be higher than the seawater pressure and not higher than the pressure in the fourth seal space S4.

The air A having a pressure lower than the pressure in the second seal space S2 and the pressure in the fourth seal space S4 is continuously introduced into the third seal space S3 from the air introduction device 41. The air introduction device 41 detects the pressure in the second seal space S2 and the pressure in the fourth seal space S4 with a pressure sensor (not illustrated) and regulates the pressure of the air A so that it is lower than the detected pressures in the second seal space S2 and the fourth seal space S4.

Accordingly, the pressure in the third seal space S3 is lower than the pressure in the second seal space S2, which is the tightening pressure on a lip portion 22a of the second lip seal 22, so that the sealing force of the second lip seal 22 can be increased. In addition, similarly, the pressure in the third seal space S3 is lower than the pressure in the fourth seal space S4, which is the tightening pressure on the lip portion 23a of the third lip seal 23, so that the sealing force of the third lip seal 23 can be increased.

In addition, since the third seal space S3 is in communication with the discharge tank 42, even if seawater SW2 in the second seal space S2 and/or a lubricating oil OL2 in the fourth seal space S4 flows into the third seal space S3, it can be collected in the external discharge tank 42. Incidentally, an on-off valve is formed in the flow passage between the third seal space S3 and the discharge tank 42, so that the communication state can be changed as appropriate.

The lubricating oil OL2 having a pressure slightly higher than the pressure in the oil chamber S7 is continuously introduced into the fourth seal space S4 from the first oil supply device 43.

A lubricating oil OL3 having a pressure lower than the pressure in the fourth seal space S4 is continuously introduced into the fifth seal space S5 from the second oil supply device 44. The pressure in the fifth seal space S5 is regulated by the degree of throttling of the pressure reducing valve 30 and is lower than the pressure in the fourth seal space S4.

Accordingly, the pressure in the fifth seal space S5 is lower than the pressure in the fourth seal space S4, which is the tightening pressure on a lip portion 24a of the fourth lip seal 24, so that the sealing force of the fourth lip seal 24 can be increased.

The valve body 35 of the pressure reducing valve 30 is pushed up by the pressure in the fifth seal space S5, and the lubricating oil OL3 in the fifth seal space S5 flows into the sixth seal space S6 through a portion of the flow passage 6 that is restricted by the pressure reducing valve 30.

Namely, a lubricating oil OL4 that has been depressurized due to pressure loss when passing through the pressure reducing valve 30 flows into the sixth seal space S6, so that the pressure in the sixth seal space S6 is lower than the pressure in the fifth seal space S5.

Accordingly, the pressure in the sixth seal space S6 is lower than the pressure in the fifth seal space S5, which is the tightening pressure on a lip portion 25a of the fifth lip seal 25, so that the sealing force of the fifth lip seal 25 can be increased.

Incidentally, the pressure in the sixth seal space S6 is lower than the pressure in the oil chamber S7, so that the lubricating oil OL1 in the oil chamber S7 may enter the sixth seal space S6, but the lubricating oil OL1 that has entered the sixth seal space S6 can be discharged to the discharge tank 45. In addition, an on-off valve is provided in the flow passage between the sixth seal space S6 and the discharge tank 45, so that the communication state can be changed as appropriate.

As described above, the lubricating oil OL3, which is adjusted by the second oil supply device 44 and is introduced into the fifth seal space S5, can be adjusted to be depressurized by the pressure reducing valve 30 and introduced into the sixth seal space S6, so that the fifth seal space S5 and the sixth seal space S6 can be easily regulated to appropriate pressures. Further, since no additional oil supply device different from the second oil supply device 44 is required, the structure can be made compact.

In addition, the flow passage 6 is provided in the housing 10. Accordingly, no piping or pressure reducing valve 30 that communicates the fifth seal space S5 and the sixth seal space S6 is provided outside the housing 10, so that the structure can be further made more compact.

In addition, the sixth seal space S6 is disposed on the ship interior side of the fifth seal space S5, and the oil chamber S7 is disposed further on the ship interior side of the sixth seal space S6, so that the lubricating oil OL1 that tends to leak from the oil chamber S7 to the ship exterior side can be collected in the lower-pressure sixth seal space S6, and the higher-pressure fifth seal space S5 is disposed on the ship exterior side of the sixth seal space S6, so that leakage of the lubricating oil OL1 to the ship exterior side can be prevented.

Incidentally, since the same lubricating oil as that in the oil chamber S7 is introduced into the sixth seal space S6, there is no problem even if the oil leaks from the oil chamber S7 to the sixth seal space S6.

In addition, the lower-pressure third seal space S3 into which the air A is introduced is disposed between the fourth seal space S4 and the second seal space S2, so that even if lubricating oil or seawater leaks into the third seal space S3, it can be collected, and there is no risk of leakage to the ship exterior side. In addition, the lubricating oil and seawater collected in the third seal space S3 can be discharged into the discharge tank 42, so that overflow from the third seal space S3 into the fourth seal space S4 or the second seal space S2 can be prevented.

In addition, the fifth seal space S5 and the sixth seal space S6 are adjacent to each other, and the fifth lip seal 25 that separates the fifth seal space S5 and the sixth seal space S6 can increase a sealing force with the pressure difference between the fifth seal space S5 and the sixth seal space S6, effectively preventing leakage of the lubricating oil. In addition, since the lubricating oil is unlikely to leak from the gap between the fifth lip seal 25 and the liner 4, the pressures in the fifth seal space S5 and the sixth seal space S6 are easily regulated.

In addition, the sixth seal space S6 is configured such that the communication state with the discharge tank 45 can be switched by the on-off valve and the lubricating oil OL4 can be discharged to the outside. Accordingly, the fluid pressure in the sixth seal space S6 can be regulated by opening and closing the on-off valve.

In addition, since the pressure reducing valve 30 is configured such that the valve body 35 is biased toward the valve seat member 36 by the spring 34, the opening is adjusted in accordance with variations in the pressure difference between the fifth seal space S5 and the sixth seal space S6, and the pressures in the fifth seal space S5 and the sixth seal space S6 can be regulated as appropriate.

Incidentally, in the first embodiment, a mode in which the first seal space S1 to the sixth seal space S6 are provided has been provided as an example; however, at least the fifth seal space S5 and the sixth seal space S6 may be provided. In addition, the fifth seal space S5 may be disposed on the ship interior side, and the sixth seal space S6 may be disposed on the ship exterior side.

In addition, in the first embodiment, a mode in which the fifth seal space S5 and the sixth seal space S6 are adjacent to each other has been provided as an example; however, an additional seal space may be formed between the fifth seal space S5 and the sixth seal space S6.

In addition, in the first embodiment, a mode in which the flow passage 6 is formed in the housing 10 to communicate the fifth seal space S5 and the sixth seal space S6 has been provided as an example; however, a piping provided outside the housing 10 may be connected to an opening of the housing to communicate the fifth seal space S5 and the sixth seal space S6.

In addition, in the first embodiment, a mode in which the same lubricating oil as that in the oil chamber S7 is introduced into the fourth seal space S4, the fifth seal space S5, and the sixth seal space S6 has been provided as an example; however, the present invention is not limited thereto, and a different fluid from that in the oil chamber S7 may be introduced thereinto. In this case, the lip portion of the sixth lip seal 26 is preferably disposed so as to face a higher-pressure side between the sixth seal space S6 and the oil chamber S7.

In addition, the pressure reducing valve 30 is assembled by screwing from the outside of the housing 10. Accordingly, the assembly and replacement of the pressure reducing valve 30 are easily performed.

In addition, since the pressure regulating rod 32 of the pressure reducing valve 30 can be adjusted from the outside of the housing 10, the biasing force of the spring 34 can be easily adjusted.

### {Second embodiment}

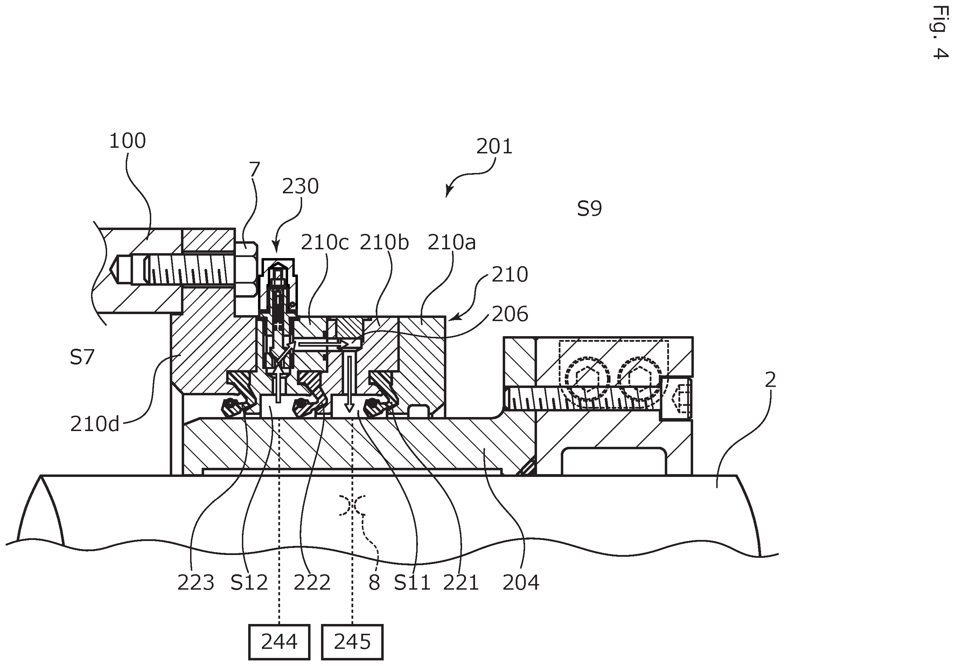

Next, a stern tube seal device according to a second embodiment of the present invention will be described with reference to FIG. 4. Incidentally, the description of configurations that are the same as and overlap with the configurations of the first embodiment will be omitted.

As illustrated in FIG. 4, a seal device 201 according to the second embodiment is disposed on the bow side of the stern tube 100 and prevents the lubricating oil in the oil chamber S7 from leaking to a machine chamber S9 inside the ship between the stern tube 100 and a liner 204 fitted and fixed onto the propeller shaft 2. The machine chamber S9 is an atmospheric space.

The seal device 201 mainly includes a housing 210 as a tubular body, a first lip seal 221 to a third lip seal 223, and a pressure reducing valve 230 as a pressure regulator.

A first split housing 210a, a second split housing 210b, a third split housing 210c, and a fourth split housing 210d in order from the bow side are fitted together in the axial direction and integrally connected with bolts (not illustrated) or the like to form the housing 210 into a substantially cylindrical shape. In the housing 210, a flange portion formed on the fourth split housing 210d on the stern side is fixed to the stern tube 100 with a bolt 7.

The first lip seal 221 has a radially outer portion held between the first split housing 210a and the second split housing 210b in a sealed manner. The second lip seal 222 has a radially outer portion held between the second split housing 210b and the third split housing 210c in a sealed manner. The third lip seal 223 has a radially outer portion held between the third split housing 210c and the fourth split housing 210d in a sealed manner.

The lip portions of the first lip seal 221 to the third lip seal 223 face toward the ship exterior side.

A seal space S11 is formed between the first lip seal 221 and the second lip seal 222. A seal space S12 is formed between the second lip seal 222 and the third lip seal 223. The oil chamber S7 is located on the ship exterior side of the third lip seal 223.

A flow passage 206 is formed in the second split housing 210b and the third split housing 210c to communicate the seal spaces S11, S12.

In addition, a pressure reducing valve 230 is assembled in the third split housing 210c so as to be capable of opening and closing the flow passage 206. Incidentally, the pressure reducing valve 230 has substantially the same configuration as the pressure reducing valve 30 of the first embodiment, and therefore a detailed description thereof will be omitted.

In addition, the seal space S11 is in communication with a discharge tank 245. Incidentally, an orifice 8 is provided in a flow passage between the seal space S11 and the discharge tank 245.

In addition, the seal space S12 is in communication with an oil supply device 244. The oil supply device 244 is configured to continuously introduce lubricating oil having a pressure slightly lower than the pressure in the oil chamber S7 into the seal space S12.

The lubricating oil in the seal space S12 is introduced into the seal space S11 through the flow passage 206 in which the opening of the pressure reducing valve 230 is adjusted according to the pressure difference between the seal spaces S11, S12. Accordingly, the pressure in the seal space S11 is lower than that in the seal space S12.

Namely, the fluid pressures are ordered as follows: the oil chamber S7 > the seal space S12 > the seal space S11 > the machine chamber S9. Accordingly, the pressure difference between the oil chamber S7 and the seal space S12 improves the sealing performance of the third lip seal 223, the pressure difference between the seal space S12 and the seal space S11 improves the sealing performance of the second lip seal 222, and the pressure difference between the seal space S11 and the machine chamber S9 improves the sealing performance of the first lip seal 221. Therefore, the lubricating oil is prevented from leaking to the machine chamber S9.

### {Third embodiment}

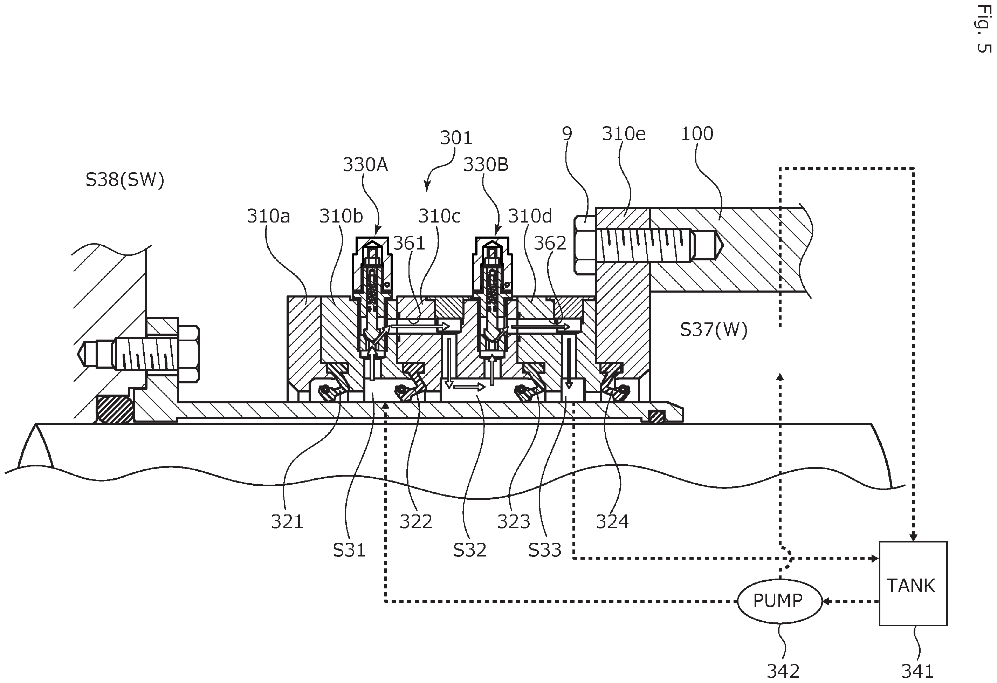

Next, a stern tube seal device according to a third embodiment of the present invention will be described with reference to FIG. 5. Incidentally, the description of configurations that are the same as and overlap with the configurations of the first embodiment will be omitted.

As illustrated in FIG. 5, a seal device 301 according to the third embodiment mainly includes a housing 310 as a tubular body, a first lip seal 321 to a fourth lip seal 324, and pressure reducing valves 330A, 330B as pressure regulators.

A first split housing 310a, a second split housing 310b, a third split housing 310c, a fourth split housing 310d, and a fifth split housing 310e in order from the stern side are fitted together in the axial direction and integrally connected with bolts (not illustrated) or the like to form the housing 310 into a substantially cylindrical shape. In the housing 310, a flange portion formed on the fifth split housing 310e on the stern side is fixed to the stern tube 100 with a bolt 9.

The first lip seal 321 has a radially outer portion held between the first split housing 310a and the second split housing 310b in a sealed manner. The second lip seal 322 has a radially outer portion held between the second split housing 310b and the third split housing 310c in a sealed manner. The third lip seal 323 has a radially outer portion held between the third split housing 310c and the fourth split housing 310d in a sealed manner. The fourth lip seal 324 has a radially outer portion held between the fourth split housing 310d and the fifth split housing 310e in a sealed manner.

The lip portions of the first lip seal 321 to the third lip seal 323 face toward the ship exterior side. The lip portion of the fourth lip seal 324 faces toward the ship interior side.

A seal space S31 is formed between the first lip seal 321 and the second lip seal 322. A seal space S32 is formed between the second lip seal 322 and the third lip seal 323. A seal space S33 is formed between the third lip seal 323 and the fourth lip seal 324.

The second split housing 310b and the third split housing 310c are provided with a flow passage 361 that communicates the seal spaces S31, S32. In addition, the third split housing 310c and the fourth split housing 310d are provided with a flow passage 362 that communicates the seal spaces S32, S33.

The pressure reducing valve 330A is assembled in the second split housing 310b so as to be capable of opening and closing the flow passage 361. The pressure reducing valve 330B is assembled in the third split housing 310c so as to be capable of opening and closing the flow passage 362. Incidentally, the pressure reducing valves 330A, 330B have substantially the same configuration as the pressure reducing valve 30 of the first embodiment, and therefore detailed description thereof will be omitted.

Water W is sealed in an internal space S37 of the stern tube 100, and the water W enhances the lubricity of the bearing.

A storage tank 341 for storing water is disposed outside the internal space S37. The storage tank 341 is connected to a pump 342. The pump 342 can pressurize and introduce the water in the storage tank 341 into the internal space S37 and the seal space S31. Incidentally, in the third embodiment, the pressure of the water W introduced into the seal space S31 is lower than the pressure of seawater SW in a ship exterior space S38.

The water W introduced into the seal space S31 is depressurized by the pressure reducing valve 330A and introduced into the seal space S32. The water W introduced into the seal space S32 is depressurized by the pressure reducing valve 330B and introduced into the seal space S33. Namely, the pressures in the spaces are ordered as follows: the ship exterior space S38 > the seal space S31 > the seal space S32 > the seal space S33. In addition, the pressure in the seal space S33 is lower than that in the internal space S37.

Accordingly, the pressure difference between the ship exterior space S38 and the seal space S31 improves the sealing performance of the first lip seal 321, the pressure difference between the seal space S31 and the seal space S32 improves the sealing performance of the second lip seal 322, the pressure difference between the seal space S32 and the seal space S33 improves the sealing performance of the third lip seal 323, and the pressure difference between the seal space S33 and the internal space S37 improves the sealing performance of the fourth lip seal 324. Therefore, the seawater SW can be prevented from flowing into the internal space S37.

In addition, the water W introduced into the seal space S33 is discharged into the storage tank 341. In addition, the water W in the internal space S37 is also discharged into the storage tank 341.

Incidentally, in the third embodiment, a mode in which the pressure of the water W introduced into the seal space S31 is lower than the pressure of the seawater SW in the ship exterior space S38 has been provided as an example; however, the seal space S31 and the ship exterior space S38 may have the same pressure, or the pressure of the water W introduced into the seal space S31 may be higher than the pressure of the seawater SW in the ship exterior space S38. This is because the water W is fresh water, so there is no problem if it is discharged into the ship exterior space S38.

In addition, in the third embodiment, a mode in which the three seal spaces S31, S32, and S33 are in communication with each other has been provided as an example; however, four or more seal spaces may be in communication with each other.

In addition, in the third embodiment, a mode in which the pressure in each of the seal spaces is reduced toward the ship interior side has been provided as an example; however, the pressure in each of the seal spaces may be reduced toward the ship exterior side.

The embodiments of the present invention have been described above with reference to the drawings; however, the specific configurations are not limited to the embodiments, and changes or additions that are made without departing from the scope of the present invention are included in the present invention.

For example, in the first to third embodiments described above, a mode in which the external fluid is seawater has been provided as an example; however, it can be freely changed to fresh water, oil, air, gas, or the like. In addition, the internal fluid is also not limited to lubricating oil or water, and may be air, gas, or the like.

In addition, in the first to third embodiments described above, a mode in which the lip seal is in sliding contact with the outer peripheral surface of the liner fitted onto the propeller shaft has been provided as an example; however, the present invention is not limited thereto, and the liner may not be provided and the lip seal may be in direct sliding contact with the outer peripheral surface of the propeller shaft 2.

In addition, in the first to third embodiments described above, the pressure reducing valve has been described as an example of the pressure regulator; however, a throttle mechanism such as an orifice may also be used. In addition, the pressure regulator is not limited to one that reduces pressure and supplies it from one of the seal spaces to another one of seal spaces; however, may be one that increases pressure and supplies it.

In addition, the pressure reducing valve is not limited to a poppet valve and may be a spool valve or the like.

In addition, the seal rings are not limited to being composed of the lip seals and may be, for example, face seals.

### {REFERENCE SIGNS LIST}

- 1: Seal device
- 2: Propeller shaft (rotating shaft)
- 6: Flow passage
- 10: Housing (tubular body)
- 25: Fifth lip seal (seal ring)
- 30: Pressure reducing valve (pressure regulator)
- 34: Spring
- 35: Valve body
- 36: Valve seat member
- 41: Air introduction device
- 42: Discharge tank
- 43: First oil supply device
- 44: Second oil supply device
- 45: Discharge tank
- 100: Stern tube
- S5: Fifth seal space (one of seal spaces)
- S6: Sixth seal space (another one of seal spaces)
- S7: Oil chamber
- S8: Ship exterior space

## Claims

1. A seal device comprising a tubular body through which a rotating shaft extends, and a seal ring attached to the tubular body and sealing between the tubular body and the rotating shaft, the seal device having at least two seal spaces with the seal ring interposed therebetween, wherein
a sealing fluid is introduced into one of the seal spaces from outside,
the one of the seal spaces and another one of the seal spaces are in communication with each other via a flow passage, and
the seal device further comprises a pressure regulator disposed in the flow passage and configured to regulate pressure of the sealing fluid introduced into the one seal space and introduce the sealing fluid into the another one of the seal spaces.

2. The seal device according to claim 1, wherein
the flow passage is formed in the tubular body.

3. The seal device according to claim 1, wherein
the another one of the seal spaces is disposed on an equipment interior side of the one of the seal spaces, and an oil chamber is disposed further on the equipment interior side as compared with the another one of the seal spaces.

4. The seal device according to claim 1, wherein
the one of the seal spaces and the another one of the seal spaces are adjacent to each other, the seal ring is a lip seal, and a sealing force is increased by a pressure difference between the one of the seal spaces and the another one of the seal spaces.

5. The seal device according to claim 1, wherein
the sealing fluid in the another one of the seal spaces is configured for being discharged to the outside.

6. The seal device according to any one of claims 1 to 5, wherein
the pressure regulator is a valve with a valve body spring-biased.
